Europäisches Patentamt

European Patent Office

Office européen des brevets

(11) Publication number: **0 154 736**
A2

# EUROPEAN PATENT APPLICATION

(21) Application number: **84305009.7**

(22) Date of filing: **24.07.84**

(51) Int. Cl.⁴: $G\ 03\ G\ 19/00$

(30) Priority: **12.03.84 US 588208**

(71) Applicant: **FERIX CORPORATION, 48571 Milmont Drive, Fremont California (US)**

(43) Date of publication of application: **18.09.85**
**Bulletin 85/38**

(72) Inventor: **Springer, Gilbert D., 549 Torland Court, Sunnyvale California (US)**

(74) Representative: **Wombwell, Francis et al, Potts, Kerr & Co. 15, Hamilton Square, Birkenhead Merseyside L41 6BR (GB)**

(84) Designated Contracting States: **DE FR GB**

(54) **Divisible multiple-head magnetic recording array.**

(57) An apparatus is provided for reproducing a final image in a magnetic image-storing medium which is transported through an imaging-producing zone, the reproduced final image being made up of a plurality of individual magnetic image units. The apparatus includes an array of co-planarly disposed, adjacent magnetic writing heads, each head being connectable to the controller to produce an image unit of the final image, the heads being arranged in generally aligned sets. Division guide means are interposed between adjacent sets of heads for facilitating subsequent replacement of one or more sets of the array.

0154736

# DIVISIBLE MULTIPLE-HEAD MAGNETIC RECORDING ARRAY

## Background of the Invention

This invention pertains generally to magnetographic reproduction systems and, more particularly, to magnetic imaging heads used to produce a magnetic image in the image-storing medium of such systems.

The invention is particularly suited to be used with the types of thin-film magnetic imaging heads and arrays of such heads which have been disclosed in my U.S. Patent No. 4,414,554, entitled MAGNETIC IMAGING METHOD AND APPARATUS, and in my prior-filed U.S. patent applications which are identified as follows: MULTIPLE HEAD MAGNETIC RECORDING ARRAY, Serial No. 381,923, filed 5/23/82; DIFFERENTIAL-PERMEABILITY FIELD-CONCENTRATING MAGNETIC WRITING HEAD, Serial No. 381,922, filed 5/26/82; THIN-FILM, COMPLIANT, NON-PRESSURE-POINT-TELEGRAPHING, ELECTROMAGNETIC READ/WRITE STRUCTURE, Serial No. 472,866, filed 3/8/83; and THIN-FILM MAGNETIC WRITING HEAD WITH ANTI-SATURATION BACK-GAP LAYER, Serial No. 473,361, filed 3/8/83. This patent and these applications are incorporated herein by reference. The inventions disclosed in the patent and the applications have made possible high-resolution, high-quality, low-cost, high-speed magnetic imaging.

Disclosed in the above-identified patent and patent applications are several different types of thin-film imaging heads, and arrays of such heads which may be used to create and read an endless variety of images such as letters in the alphabet. Each imaging head includes a magnetizable coil which is capable of producing a magnetic image. When a facial expanse of the magnetic image-storing medium is passed across the writing head, a corresponding magnetic image is created in the medium. Magnetically attractable toner is then applied to the magnetic image, such toner being transferred to a toner-adherable receiving medium such as paper, thereby resulting in reproduction of the image which had been originally conveyed by the imaging heads.

More specifically, each imaging head is capable of producing a single magnetic image unit. The imaging heads are disposed within an array of such heads, such that the entire facial expanse of the recording medium is subjected to having image units produced thereon as the facial expanse passes across the imaging heads. Therefore, it is critical that each imaging head be precisely positioned within the array, and that every imaging head be functional. If any single head is slightly misplaced or is not functional, there would be a strip in the facial expanse which is not being subjected to magnetic imaging.

Because it is critical that each imaging head be properly positioned and functional, stringent quality control measures must be taken during the manufacturing process. Regardless of the care taken during manufacture, however, some heads invariably are defective. When a defective head is identified during quality examination procedures, it may be necessary to discard an entire array of heads.

It is an object of the present invention to provide a method for removing defective heads subsequent to assembly and testing, which does not require destruction of the entire head array. Stated another way, the object of the present invention is to develop a technique for repairing defective head arrays, with the ultimate object being to reduce manufacturing costs. Another object of the invention is to provide a method for forming a head array from a plurality of partial arrays or sets of imaging heads. Yet another object is the provision of a method for aligning adjacent head arrays.

## Summary of the Invention

The present invention achieves the above objects by providing an apparatus including an array of co-planarly disposed, adjacent magnetic writing heads, each head being connectable to the controller to produce an image unit of the final image, the heads being arranged in generally aligned sets. Division guide means are interposed between adjacent sets of heads for providing the separation line for removal of a set from the array and for establishing relative alignment of the sets after such removal.

Other objects, features and advantages of the present invention will become apparent upon reading the following detailed description in conjunction with the accompanying drawings.

## Brief Description of the Drawings

Fig. 1. is a schematic view of the environment in which the present invention may be utilized;

Fig. 2 is an enlarged, fragmentary schematic diagram showing a head array assembly used in the system of Fig. 1;

Fig. 3 is an enlarged, simplified, fragmentary plan view of a portion of the array of Fig. 2; and

Fig. 4 is a schematic, perspective view of one type of optical bench which may be used to practice the present invention, depicting sets or arrays of heads being assembled thereon.

<u>Detailed Description of a Preferred Embodiment</u>

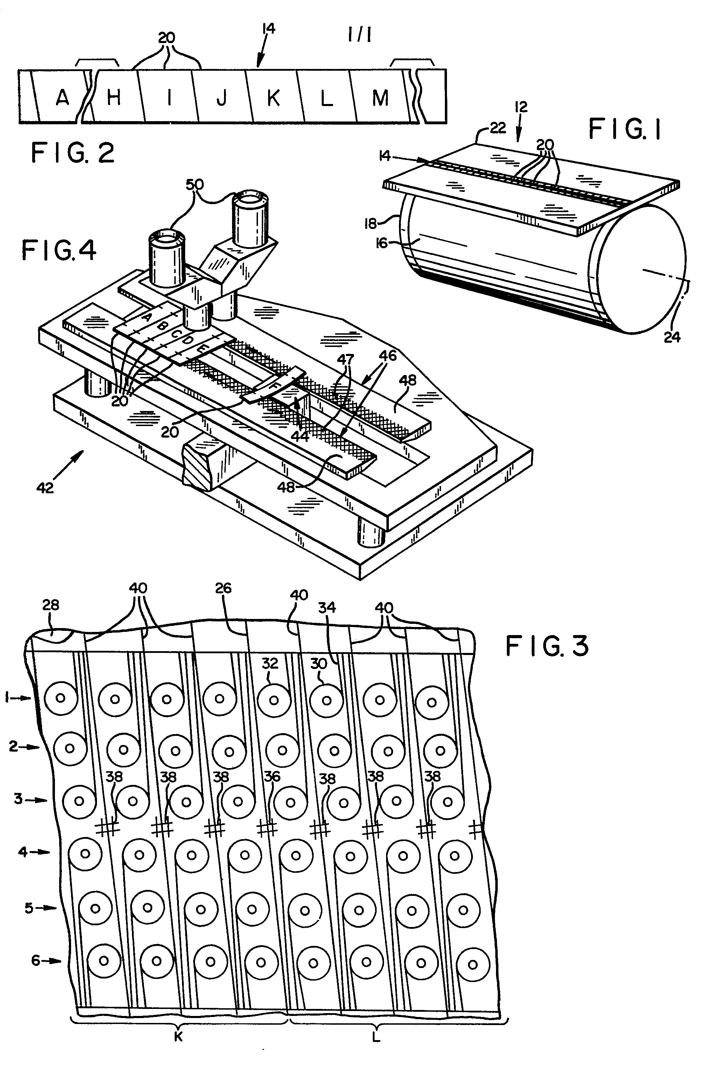

The objects of the present invention are particularly well achieved when the invention takes the form of the embodiment depicted in Fig. 4. However, reference will first be made to schematic Figs. 1 and 2 so that the environment of the invention can be understood.

Referring initially to Fig. 1, an imaging system 12 including a plurality of head array assemblies 14 is adapted to receive signals from a data input source (not shown) and transform those signals to magnetographic images in a magnetic imaging medium 16 which is typically wrapped around the circumference of a drum 18. The medium may alternatively be mounted to a disc or any other conventional medium mounting means. Head array assembly 14 includes a plurality of head arrays, such as array 20. Head array assembly 14 is mounted to a support structure 22 which is schematically depicted in Fig. 1, but which more typically takes the form of the mounting structure described in my recently-filed U.S. patent application entitled HEAD ARRAY MOUNTING STRUCTURE, Serial No. _____, filed _____, which is incorporated herein by reference. Drum 18 is rotatable about a longitudinal axis 24 so that a so-called magnetic facial expanse (not identified) of imaging medium 16 passes immediately below head array assembly 14.

Fig. 2 depicts in schematic, fragmentary form, an enlarged view of the head array assembly 14 which is shown in Fig. 1. The individual head arrays 20 are designated with alphabetical letters sequentially from the left. The total number of arrays depends upon the width of the image-storing medium.

Fig. 3 is a more detailed view, in fragmentary form, of a portion of head array assembly 14 shown in Figs. 1 and 2.

Portions of the arrays designated in Fig. 2 at "K" and "L" are shown. The common edge between arrays "K" and "L" is shown as line 26. Each array 20 includes a host web 28 in which are mounted a plurality of writing heads, such as heads 30 and 32. Each head 30, 32 has connected to it an electrical conductor or signal line, such as line 34 connected to head 30, which eventually leads to a channel of the data input source.

The particular construction of each head 30, 32 and the method for producing image units in image storing medium 16 is described in the above-identified patent. From that description it can be seen that each head 30, 32 is capable of producing, when operatively excited, a well-defined circular magnetic image unit in the facial expanse of medium 16. The operation of head array assembly 14 is described in my patent and in my above-referenced patent application entitled MULTIPLE HEAD MAGNETIC RECORDING ARRAY.

The imaging heads 30, 32 are distributed in sets or columns along a path which is slightly oblique with respect to the direction of travel of the medium across the head. This is so that every portion of medium 16 will be subjected to magnetic imaging. In the depicted embodiment each column extends in a generally vertical direction and contains six heads. The six heads of each column are preferably disposed in rows across the arrays, with the rows designated 1-6, beginning at the top as depicted. Sixteen columns are normally provided in each array 20, but all of the columns of arrays K and L are not shown in Fig. 3. The columns are identified with numerals 1-16, but only columns 13-16 of array K, and columns 1-4 of array L appear in Fig. 3. As a result of these designations, each head may be identified by its array, column and row.

Because the individual imaging heads 30, 32 must be precisely positioned, it is essential that some means be provided to permit precise alignment of adjacent head arrays 20, such as arrays K and L, during the manufacturing and assembly process. Also, as mentioned above, the existence of defective individual imaging heads may cause an entire array to be discarded unless some means is provided for removing the defective head from the array, substituting one or more good heads, and then realigning the good heads into the array.

The present invention provides so-called division guide means which permits a single column of heads to be removed from an array, thereby permitting the remainder of the array to be salvaged. In the depicted embodiment the division guide means takes the form of marker means or markers such as those shown at 36 along the juncture line 26 between head arrays K and L. These markers 36 are provided etched into host web 28 at the time of manufacture. Other markers 38 are provided adjacent predetermined cutting lines 40, which are etched into host web 28 to weaken the web and facilitate possible subsequent cutting along such line to remove defective heads.

More specifically, to remove a column having a defective imaging head, a conventional semi-conductor dicing saw is used to effect a clean cut along each side of the column. It is important during such cutting that conductors 34 not be cut or damaged during this process. After removal of the column having the defective head or heads, a new column is substituted, the new column also having markers to facilitate realignment. The realignment and reassembly procedure, which is basically the same procedure that is used in assembling and aligning a pair of arrays such as K and L, will now be described.

Fig. 4 schematically depicts a so-called optical bench 42 which is used for realignment and reassembly. Optical bench 42 can be conventional in design and is often used to precisely align items of this nature. Fig. 4 depicts a plurality of head arrays 20, such as arrays A-F, being assembled using markers 36. As noted above, however, the same assembly procedure would take place with respect to the individual columns of a head array 20 using markers 38.

Optical bench 42 includes a vacuum head 44 which is displaceable along four different lines of travel: first, it reciprocates in either direction along a horizontal so-called X line of travel; second, it reciprocates along a horizontal Y line of travel which is perpendicular to the X line; third, travel is permitted along a vertical Z line which is perpendicular with respect to both the X and Y; and fourth, rotational movement of the head is possible in a so-called theta (____) direction. This capability of movement along four different lines of travel facilitates precision positioning and alignment of head arrays 20 or columns of imaging heads 30, 32.

As shown in Fig. 4, a pair of linear, beveled feet 46 are positioned on optical bench 42, extending in a direction parallel to the X plane of travel. Feet 46 are positioned and spaced sufficiently apart that when a head array 20 is centered between the feet, only the conductors 34 and not the imaging heads 30, 32 are disposed over the feet, for reasons to be explained below. An adhesive 47 has previously been applied to the upwardly facing surface 48 of feet 46 to assist in the assembly and mounting of head arrays 20, as will be explained below. Adhesive 47 typically takes the form of two-sided adhesive tape. Each head array 20 is normally manufactured with an upwardly concave curvature so that the central portion of each array, that is, the portion containing the imaging heads 30, 32, is engaged by vacuum head 44 of optical bench 42. Because of the curvature of the head arrays, the ends of the individual arrays do not contact surface 48 of feet 46.

Fig. 4 depicts head arrays A-E already fixed with respect to themselves and with respect to feet 46. Head array F is shown being moved into position adjacent head array E. Vacuum head 44 thus engages the central, imaging head portion of the head array, and the vacuum head is moved along the X line of movement until it approaches head array E. Head array F does not normally have to be adjusted in the Z direction, because as long as feet 46 are aligned, self-alignment in the Z direction will occur as the head array is mounted to the feet. However, head array F can be precisely positioned in the X, Y and theta ( ) directions using markers 36 and viewing through magnifying lenses 50. Magnifying lenses 50 include alignment reticles (not shown) which indicate precision alignment when the lense reticles are in alignment with markers 36 and when markers 36 are in alignment with one another. At this point, the two ends of the head array are pressed downwardly onto surface 48 of feet 46, causing adhesive 47 thereon to engage the head array. The next head array G can then be positioned and assembled into place.

While this discussion makes reference to positioning and assembling a plurality of individual head arrays A-F, the process is, of course, equally suited to reassembly of a particular array which has had a column of imaging heads removed from it as a result of manufacturing defects. Thus, markers 38 of the individual columns of imaging heads would be utilized in place of markers 36 as described above.

To complete the assembly process, a so-called flex circuit (not shown) is mounted onto each side of the head arrays which have been positioned and mounted to feet 46. The flex circuits include circuit contacts (not shown) which are disposed in electrical contact with the conductors 34 extending outwardly from the head arrays. A clamp bar (not shown) is then assembled to each of feet 46 to fix the flex circuit and head arrays in electrical contact. The structure of the flex circuit and clamp bar as well as feet 46 is described in detail in my recently-filed U.S. patent application entitled HEAD ARRAY MOUNTING STRUCTURE, filed _____, Serial No. _____.

Changes and modifications to the preferred embodiment described herein will be apparent to those skilled in the art. Such changes and modifications can be made without departing from the spirit and scope of the present invention and without diminishing its attendant advantages. It is, therefore, intended that such changes and modifications be covered by the following claims.

CLAIMS:

1. In an imaging system of the type having a controller adapted to convey data defining a final image and employing a magnetic image-storing medium and an image-producing zone through which the medium is transportable, apparatus for reproducing the final image in the medium as the medium is transported through the image-producing zone, the reproduced final image being made up of a plurality of individual magnetic image units, the apparatus comprising:

an array of co-planarly disposed, adjacent magnetic writing heads, each head being connectable to the controller to produce an image unit of the final image, the heads being arranged in generally aligned sets; and

division guide means interposed between adjacent sets of heads for facilitating subsequent replacement of a set of the array.

2. The apparatus of claim 1 wherein each said division guide means comprises a predetermined division line with marker means adjacent thereto.

3. The apparatus of claim 2 wherein said marker means are optically visible.

4. The apparatus of claim 2 wherein each said predetermined division line comprises a pre-weakened line.

5.    The apparatus of claim 1 wherein each said array includes a conductor region adjacent each of two ends with a head region disposed therebetween, further comprising mounting means for said writing head array, said mounting means including:

a pair of spaced, substantially parallel mounting bars adapted to receive said array therebetween while contacting only said conductor regions thereof; and

a pair of spaced, substantially parallel clamping bars, one of each of said clamping bars being a affixed to each of said mounting bars to form a pair mounting/clamping bar assemblies, with said writing head array being clamped by one of said mounting/clamping bar assemblies adjacent each conductor region thereof.

6.    The apparatus of claim 1 wherein each said array includes a conductor region adjacent each of two ends with a head region disposed therebetween, further comprising mounting means for said writing head array, said mounting means including; and

means associated with said mounting bars for releasably holding said array thereon.

7.    The apparatus of claim 6 wherein said means for releasably holding said array comprises adhesive disposed on a face of each of said mounting bars.

0154736

8.     The apparatus of claim 7 wherein said means for releasably holding said array further comprises a pair of spaced, substantially parallel clamping bars one of each of said clamping bars being affixed to each of said mounting bars to form a pair of mounting/clamping bar assemblies with said writing hear array being clamped by one of said mounting/clamping bar assemblies adjacent each conductor region thereof.

9.     An array of generally aligned imaging heads of the type useable in an image-producing zone of a magnetic imaging system employing a magnetic image-storing medium having a magnetizable facial expanse transportable through the image-producing zone to produce a plurality of individual magnetic image units in response to a magnetic signal from the imaging heads initiated by a controller to which the imaging heads are electrically connected by conductors extending outwardly in each direction therefrom in generally the same direction as the alignment of the imaging heads, each imaging head array including marker means adjacent the lateral periphery thereof for established relative alignmnet of said arrays.

- 13 -   0154736

10.    An imaging system comprising:

an image producing zone including a plurality of arrays of generally aligned sets of magnetic imaging heads adapted to receive a magnetic signal from a controller via conductors which extend outwardly from said imaging heads in generally the same direction as the alignment of said imaging heads;

a magnetic image storing medium having a magnetizable facial expanse transportable through the image-producing zone to produce a plurality of individual magnetic image units in response to a magnetic signal from the imaging heads corresponding to the magnetic signal from the controller;

toner application means for applying a magnetically attractable toner to the magnetic images in said medium; and

toner transfer means for transferring the toner from the magnetic images to a toner-receiving medium;

wherein each said array includes division guide means interposed between adjacent sets of imaging heads for facilitating removal and subsequent replacement of a set of said array.


11.    The apparatus of claim 10 wherein each said division guide means comprises a predetermined, pre-weakened division line with marker means adjacent thereto.

0154736

FIG. 2

FIG. 1

FIG. 4

FIG. 3